# EUROPEAN PATENT SPECIFICATION

(11) **EP 3 037 003 B1**
(45) Date of publication and mention of the grant of the patent: **25.01.2017**
(21) Application number: 14382558.6
(22) Date of filing: 23.12.2014
(51) Int. Cl.: A23L 3/00, A23L 3/3418, A23L 3/36

(54) **Food preservation process combining cryogenic freezing and modified atmosphere packaging**
Konservierungsverfahren von Lebensmittel, das kryogenes Gefrieren und Verpacken unter Schutzgasatmosphäre kombiniert
Procédé de conservation des aliments combinant surgélation cryogénique et l'emballage sous atmosphère modifiée

(43) Date of publication of application: 29.06.2016
(73) Proprietor: AIR PRODUCTS AND CHEMICALS, INC., Allentown, PA 18195-1501 (US)
(72) Inventor: Guri Baiget, Sonia, 08193 BELLATERRA (ES); Vega Fernández, Lourdes, 08193 BELLATERRA (ES); Pons Veiga, María José, 08193 BELLATERRA (ES); Callens, Ann, 1160 BRUSSEL (BE)
(74) Representative: Beck Greener

(56) References cited:
- EP-B1- 1 523 250
- WO-A1-2008/009450
- ZHOU G H ET AL: "Preservation technologies for fresh meat - A review", MEAT SCIENCE, ELSEVIER SCIENCE, GB, vol. 86, no. 1, 1 September 2010 (2010-09-01), pages 119-128, XP027171493, ISSN: 0309-1740 [retrieved on 2010-07-22]
- HOFFMANNS W: "Chilling, freezing and transport. Refrigeration applications using the cryogenic gases liquid nitrogen and carbonic acid", FLEISCHWIRTSCHAFT, DT. FACHVERL, DE, vol. 74, no. 12, 1 January 1994 (1994-01-01), pages 1309-1311, XP008123868, ISSN: 0015-363X

## Description

The present invention relates to a method of food preservation and to a food product preserved using such a method.

Changes in lifestyle have led to increasing demand for fresh, natural and healthy food products which are also easy and quick to prepare.

In addition to this, food industry distribution channels have changed to cover longer distances. This requires food products with longer shelf-lives to ensure that they remain safe to consume.

Food may be preserved by freezing. Methods of freezing food include mechanical freezing and cryogenic freezing, both discussed in more detail below. Freezing delays some types of food deterioration. However, certain food deterioration reactions may take place during the frozen period. These include for example lipid oxidation. It is desirable to delay deterioration of frozen food during the frozen period so as to extend its life.

It is also desirable to delay deterioration of frozen food after it is thawed (defrosted). Microorganisms will typically grow more quickly on a thawed frozen sample than on a chilled sample. This is believed to be because freezing damage aids the ingress of micro-organisms and increases the nutrients available to the micro-organisms.

There is a growing interest in "freeze-chilling" i.e. freezing food, storing the food under frozen conditions, thawing the frozen food and distributing the thawed food for sale under chilled (refrigerated) conditions (so-called) (Patsias et al., 2008). Freeze-chilling may offer benefits for producers, distributors and consumers. A fraction or a whole batch of frozen product can be thawed according to demand. Thawing can in some cases take place during transportation. Freeze-chilling offers frozen food producers the opportunity to enter the market for chilled food products in competition with fresh food producers, with little change required to their processes.

However, the shelf-life of freeze-chilled food may be limited by deterioration during the frozen period or after thawing as mentioned above.

Modified (non-air) atmosphere packaging (MAP) is another approach used in food preservation. MAP is typically used for chilled foods. MAP can be used to extend the shelf-life of food products e.g. by inhibiting microbial spoilage and oxidation. MAP may also be used for other purposes including enhancing appearance. For example, inclusion of oxygen in a modified atmosphere can be used to give a red colour to meat.

Freeze-chilling combined with MAP has been attempted (Fagan et al. 2004, Redmond et al. 2004, Patsias et al. 2008, Boeknaes et al. 2000, Boeknaes et al. 2001). However, inconsistent results have been reported. Redmond et al. and Patsias et al. reported that MAP had little effect on shelf-life or product quality. Boeknaes et al. 2001 reported that application of MAP during frozen storage should be avoided as it led to drip loss after thawing. Fagan et al. reported that fish freeze-chilled with MAP was near the end of its chilled shelf-life after 5-7 days.

Surprisingly, the present inventors have been found that good results can be obtained by combining cryogenic freezing with modified atmosphere packaging. These results are particularly useful in freeze-chilling. This is in contrast to the inconsistent results reported above when mechanical freezing was used in a combination of freeze-chilling and modified atmosphere packaging.

Accordingly, in a first aspect the present invention provides a method of food preservation comprising providing a frozen food product in modified atmosphere packaging by the steps of:
- cryogenic freezing of the food product; and
- modified atmosphere packaging of the food product, wherein the steps can be conducted in either order.

Preferably, the modified atmosphere packaging step takes place before the cryogenic freezing step and no heating step (e.g. no step of heating above 0 °C or room temperature and/or no cooking step) takes place between the modified atmosphere packaging step and the cryogenic freezing step.

In a second aspect, the invention provides a food product preserved by the method described herein.

Features described in connection with any aspect of the invention can be used in connection with any other aspect of the invention.

### Freezing Step

The term "freezing" as used herein refers to complete freezing (i.e. transformation of water to ice) through to the core of the food product. It does not include partial freezing (wherein only a part of the water in the food product becomes ice) or crust freezing (wherein only the surface of the food product is frozen).

The term "cryogenic freezing" as used herein includes direct contact between a packaged or unpackaged food product and a cryogen (also referred to herein as a "cryogenic fluid") at low temperature. The cryogen need not contact the food itself.

Zhou et al. (2010) and Hoffmanns (1994) disclose cryogenic freezing processes for food products.

Because cryogenic freezing is conducted at very low temperatures, freezing is very rapid. In cryogenic freezing, no mechanical cooling cycle is used. This is in contrast to mechanical freezing, wherein a circulating refrigerant is used to cool air within the freezer, leading to slower freezing. Typically mechanical freezing temperatures are -30 °C or higher.

The cryogen may be a liquid, a solid, a gas, or a mixture of two or more phases.

A cryogenic liquid is typically a liquified gas i.e. a substance which is gaseous at room temperature and pressure but which can be liquefied at high pressures and/or low temperatures. Suitable cryogenic liquids include liquid nitrogen.

A cryogenic solid is typically also a substance which is gaseous at room temperature and pressure. An example of a cryogenic solid is carbon dioxide.

The cryogen may contact the food product in various ways, including by immersion and/or by impingement (e.g. using a liquid cryogen spray).

Cryogenic freezing may take place within a cryogenic freezing apparatus. The cryogenic freezing apparatus may be suitable for batch freezing or continuous freezing. Examples of continuous freezing arrangements include a tunnel freezer or a spiral freezer.

The time and temperature of the cryogenic freezing process depends on the kind of product to be frozen and the equipment performance.

Typically, a freezing temperature of -30 °C or lower is used; preferably the temperature is -40 °C or lower, more preferably - 60 °C or lower e.g. about -75 °C. Preferably, the food product reaches a core temperature of -10 °C or lower, typically -15 °C or lower, e.g. about -18 °C or -20 °C.

An example of suitable operating conditions (used in the examples herein) is indicated below.

The food products were frozen in mini-batch cryogenic freezing equipment (CM 85™) using spraying with liquid nitrogen (LIN).

The set-point temperature was set to -75 °C (a range of -80 °C to -50 °C is possible).

The freezing process consisted of 3 phases. In the first phase LIN was injected in order to decrease the temperature inside the mini-batch to reach the set point temperature. Subsequently the second phase started (duration 15 minutes or less). In this step the product began to freeze and at the end, its core temperature was around -2 °C (freezing point). After that, the third phase started (duration 10 minutes) keeping the temperature of the mini-batch at -75 °C (this temperature increases because there is no injection of LIN); at the end of this step the product reached a core temperature of -20 °C.

### Modified Atmosphere Packaging Step

The term "modified atmosphere" refers to a gas or mixture of gases different from air composition. In modified atmosphere packaging of food, the modified atmosphere is introduced in a food package so that the food product is surrounded by the modified atmosphere.

Modified atmosphere packaging for non-respiring products such as meat, ready to eat meals, fish etc. typically includes a gas barrier material to prevent gas diffusion between the inside of the package and the surrounding environment. Suitable gas barrier materials include polyester (PET), nylon (PA) and ethylene vinyl alcohol (EVOH) among others, but in many cases the water vapour barrier of these films are poor. For that reason multilayer films (e.g. polyethylene/EVOH) are used to combine the properties of the different films to have the appropriate packaging material.

The type of packaging is dependent on the nature of the food product. Typical examples include trays with film lids and/or wrapping and bags. Typically, the packages are for retail to consumers and contain an appropriate amount of food product for that purpose e.g. in the range of 100 g - 3 kg. However, larger packages e.g. for wholesale use are also contemplated. The use of bulk modified atmosphere containers used for transport or storage of food which is then removed for retail purposes is not preferred.

The modified atmosphere packaging step may take place before or after the freezing step.

The modified atmosphere packaging step may include a step of modifying the atmosphere within an existing or part-formed package of food product e.g. by means of flushing with the gas mixture and removing the air inside the package or by means of producing a vacuum inside the package and afterwards filling the package with said gas mixture.

The modified atmosphere packaging step can also include the use of scavengers.

The modified atmosphere gas may be a pure gas (e.g. pure CO₂, O₂, N₂ or Ar) or a combination of said pure gases in a gas mixture.

Preferably, the modified atmosphere gas includes a different proportion of oxygen (higher or lower) from air. In some preferred embodiments, the modified atmosphere gas does not include oxygen. Exclusion of oxygen is helpful in inhibiting oxidation.

Preferably, the modified atmosphere gas includes more carbon dioxide than does air. The modified atmosphere preferably includes at least 5 vol% carbon dioxide. For example, the amount of carbon dioxide may be at least 25 vol%, preferably at least 35 vol%, more preferably at least 45 vol%. Elevated carbon dioxide levels are helpful in inhibiting growth of microorganisms by decreasing the rate of respiration. This is particularly relevant for Gram negative microorganisms.

Preferably, the modified atmosphere gas includes nitrogen, for example in an amount of 40-80 vol%. Nitrogen acts as an inert atmosphere.

Preferred gas mixtures include carbon dioxide, nitrogen and optionally oxygen and/or argon.

Some examples of suitable gas mixtures include:

CO₂/O₂/N₂: 30/20/50

CO₂/N₂: 30/70

CO₂/N₂: 40/60

CO₂/N₂: 50/50

The volume of modified atmosphere gas mixture within the package depends on the product type, but suitably, the relation is 2:1 (volume of gas: volume of product). The industrial ratio is typically closer to 1.5:1.

The packaging machines are those generally used in the food industry, including vacuum chambers, snorkel type, tray lidding, horizontal form-fill-seal, vertical form-fill-seal and thermoform-fill-seal.

### Frozen Storage Step

The food is stored at frozen storage temperatures e.g. below -10 °C, preferably -30 °C to -10°C. Preferred frozen storage temperatures are typically around -18 °C.

The food may be stored for a long period of time, preferably at least one month, more preferably between 1 and 18 months (for example between 1 and 6 months, preferably 3 to 6 months).

### Thawing Step

Preferably, the food product is suitable for storing at chilled temperatures after thawing. The method preferably includes a step of thawing the food i.e. increasing its core temperature to 0 °C or higher. This preferably takes place under chilled conditions (e.g. at about 4 °C).

The food is typically thawed over 24-48 hours (depending on the nature of the product and its size). Thawing may take place during transportation e.g. in a refrigerated lorry.

### Chilled Storage Step

The food is preferably stored after thawing under chilled conditions (e.g. at about 4 °C).

Storage may suitably take place for 10 days or more, preferably 20 days or more, more preferably 30 days or more e.g. for about 40 days. The time will depend on the type of food product.

The storage may include some or all of warehouse storage; storage during transportation; storage in a retail cabinet; storage in a domestic refrigerator.

As will be understood, the food may pass through a non-chilled environment for short periods of time e.g. during stocking of retail cabinets or when being transported from a retail cabinet to a domestic refrigerator.

### Refreezing

In some embodiments, the thawed food product is suitable for refreezing. The method of the invention may include a step of refreezing of thawed food product. Typically this will be mechanical freezing (e.g. in a domestic freezer).

Refreezing may suitably take place after chilled storage for 10 days or more e.g. about 20 days.

The refrozen food product may be stored under frozen conditions for 10 days or more.

### Food Product

The invention is applicable to food products in general. Preferred food products include:
- raw or cooked meat
- raw or cooked fish (including raw fish at sea)
- raw or cooked vegetables
- ready-made food products (e.g. pasta dishes, rice dishes, pastry products; also referred to herein as "ready-to-eat" food products), in particular ready-made food products which include meat and/or fish.

The invention may also be applied to other food products including for example shellfish, dairy products, fruit, desserts and bread.

Examples of food products include chicken, cod, paella, lasagne and pasties.

### Drawings

The invention will be further described with reference to the following non-limiting examples and drawings. In the drawings:
Fig. 1 is a flow chart showing experimental design for the examples.
Fig. 2 shows evolution of TBA values (mg MDA/kg samples) in chicken drumsticks packaged under different conditions (CRYO+Air, CRYO+MAP, MAP+CRYO) and stored for 1 month at -18 °C, then thawed and kept at 4 °C for 12 days (Example 1).
Fig. 3 shows changes in total aerobic (a) and psychrotrophic (b) counts (log cfu/g) in chicken drumsticks packaged as in Fig. 2.
Fig. 4 shows evolution of TBA values (mg MDA/kg samples) in chicken of paella packaged under different conditions (CRYO+Air, MAP+CRYO), and stored for 2.5 month at -18 °C, then thawed and kept at 4 °C for 21 days (Example 2).
Fig. 5 shows the evolution of TBA values (mg MDA/kg samples) in Lasagne bolognese cryogenically frozen and packaged with air (CRYO+Air) and with MAP using the mixture CO₂/N₂: 50/50 (CRYO+MAP), kept frozen (-18 °C) for 1 month, thawed and kept at 4 °C for 21 days (Example 3).
Fig. 6 shows the evolution of the a* parameter (redness/greenness) in lasagne bolognese packaged as in Fig. 5.
Fig. 7 shows the evolution of total aerobic counts (log cfu/g) in breaded chicken breasts cryogenically frozen and packaged with air (CRYO+Air) and with MAP (CRYO+MAP), kept frozen (-18 °C) for one month, thawed and kept at 4 °C for 10 and 20 days and refrozen and stored for 15 days at -18 °C (Example 4). After that period the samples were thawed and analyzed.
Fig. 8 shows the evolution of total aerobic counts (log cfu/g) in breaded chicken breasts cryogenically frozen and packaged with air (CRYO+Air) and with MAP using the mixture CO₂/N₂: 50/50 (CRYO+MAP), kept frozen (-18 °C) for 3 (a) and 6 months (b), thawed and kept at 4 °C for 7 days (Example 5).
Fig. 9 shows the evolution of total aerobic counts (log cfu/g) in breaded chicken breasts cryogenically frozen and packaged with air (CRYO+Air),with MAP using the mixture CO₂/N₂: 50/50 (CRYO+MAP) and only MAP (MAP), kept frozen (-18 °C) for 1 month, thawed and kept at 4 °C for 21 days (Example 6).
Fig. 10 shows the evolution of total aerobic counts (log cfu/g) in desalted cod steaks cryogenically frozen and packaged with MAP using the mixture CO₂/N₂: 40/60 (CRYO+MAP), with air (CRYO+Air), and only MAP (MAP), kept frozen (-18 °C) for 1 month, thawed and kept at 4 °C for 40 days (kept at 4 °C throughout for MAP) (Example 7).
Fig. 11 shows the evolution of exudates generated (%) in desalted cod steaks packaged as in Fig. 10.
Fig. 12 shows the evolution of the de-laminated parameter (subjective scores) in desalted cod steaks packaged as in Fig. 10. A score of 5 is best and a score of 1 is worst.
Fig. 13 shows the evolution of total aerobic counts (log cfu/g) in grilled vegetables cryogenically frozen and packaged with air (CRYO+Air) and with MAP (CRYO+MAP), kept frozen (-18 °C) for one month, thawed and kept at 4 °C for 21 days and re-frozen and stored for 10 days at -18 °C (Example 8). After that period the samples were thawed and analyzed. (The samples were kept at 4 °C throughout for MAP.)
Fig. 14 shows the evolution of total aerobic counts (log cfu/g) in breaded chicken breasts cryogenically frozen or mechanically frozen and packaged with air (CRYO+Air, MEC+Air), with MAP using the mixture CO₂/N₂: 50/50 (CRYO+MAP, MEC+MAP) and only MAP (MAP), kept frozen (-18 °C) for 1 month, thawed and kept at 4 °C for 21 days.

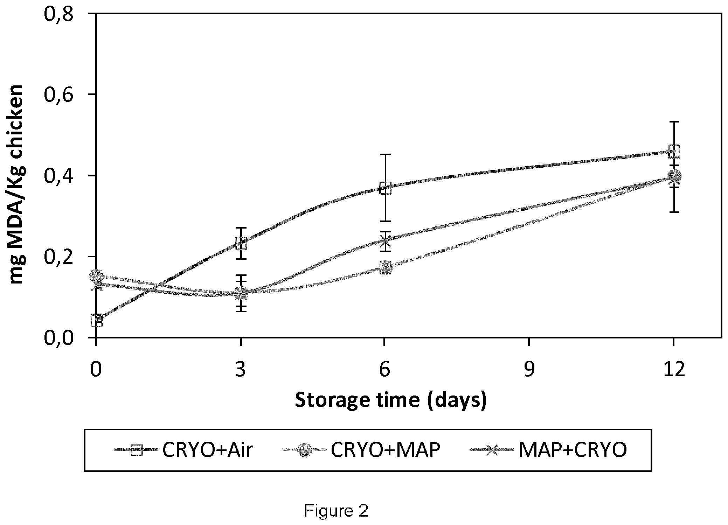

The values represented in Figs. 2 to 9, 11 and 14 are the average of three samples ± standard error.

### Examples

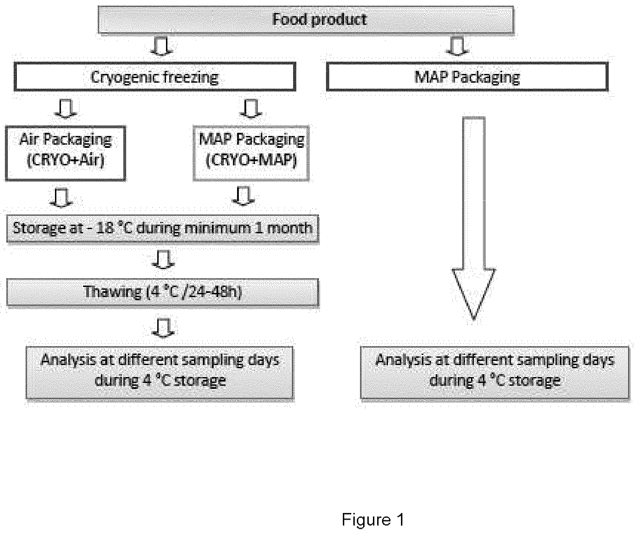

Comparisons were made between food treated according to the invention (cryogenic freezing and modified atmosphere packaging); food treated with cryogenic freezing and packaged in air; and non-frozen food with modified atmosphere packaging. The procedure is summarised in the flow chart Fig. 1. The cryogenic freezing process was as described under "Freezing Step" above. Modified atmosphere packaging was carried out in a vacuum chamber or in a tray lidding apparatus. A further comparison was made with food treated with mechanical freezing and modified atmosphere packaging (Example 9).

At the beginning of the tests (initial point), and during the shelf-life period assessment at 4 °C, the following different types of determination were carried out (depending on the food product).

### Physico-chemical analysis

- Surface color: measured with a colorimeter. The parameters analyzed were L*, a* and b* (L*: measures the brightness, a*: the equilibrium between green and red, and b*: the equilibrium between yellow and blue).
- Lipid oxidation: the TBA index was determined using a spectrophotometric method (Pegg, 2001) to evaluate oxidation stability during chilled storage. Results were expressed as mg malonaldehyde/kg meat muscle (mg MDA/kg).
- Drip release from food product after storage period: this was measured by removal of the product from the package material and weight of the produced exudates.

### Microbiological analysis

Total aerobic counts (TAC) (moderate temperature), psychrotrophic (cold temperature) microorganisms, *Enterobacteriaceae , Staphylococcus aureus, Clostridium perfringens, Escherichia coli, Salmonella spp* and *Listeria spp* were periodically evaluated throughout storage and depending on the food product.

### Sensorial evaluation

The parameters evaluated were: general aspect of the product, aroma, taste and texture. The sensorial evaluation was carried out on each of the sampling days until the panel experts decided to stop it because of the development of microorganisms. After that period only the overall aspect of the samples was assessed. For the sensorial evaluation, the samples from the different treatments were compared with fresh products.

### Statistical analysis

The results were subjected to analysis of variance (ANOVA). Means and standard error were calculated and when F values were significant at the P<0.05 level, the Tukey-HSD procedure

(honestly significant difference) was used for evaluating differences between averages at the 5% significance level.

### Example 1

The first trials were conducted with raw chicken drumsticks purchased from a local market and immediately transported to the laboratory facilities where samples were processed. The product was packaged in trays using a tray lidding packaging machine.

The aim of this test was to investigate whether the final results were affected by the sequence of the process steps. For this reason the treatments were:
1. Cryogenic freezing of the drumsticks followed by air packaging (CRYO+Air),
2. Cryogenic freezing of the drumsticks followed by MAP (CRYO+MAP),
3. Modified atmosphere packaging (MAP) followed by cryogenic freezing of the product (MAP+CRYO).

The gas mixture for the MAP treatment was CO₂/O₂/N₂: 30/20/50.

All the trays were frozen in mini-batch cryogenic freezing equipment and kept at -18 °C for 1 month. After that period all samples were thawed, kept at 4 °C for the sampling period (12 days), and evaluated.

The results showed that the evolution of product color (measured as L*, a* and b* colorimetric parameters) remained more stable in the MAP treatments than in air packaging samples.

The lipid oxidation, expressed as thiobarbituric acid index (TBA), showed initial low levels for all batches. This parameter increased during storage, with a higher increase in CRYO+Air samples compared to samples packaged under CRYO+MAP and MAP+CRYO conditions (Fig. 2).

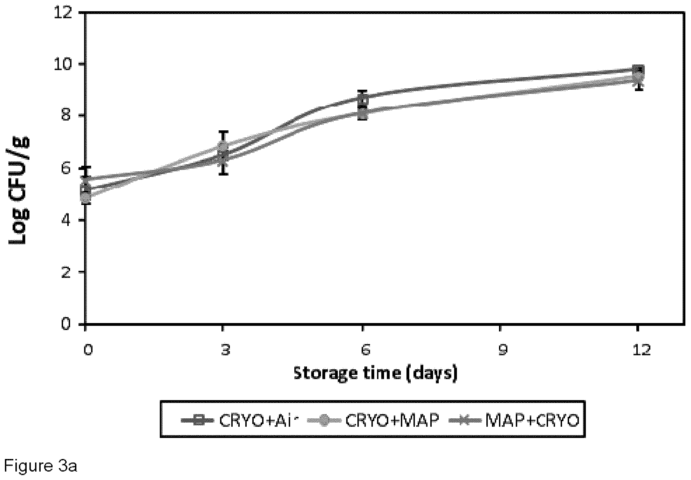

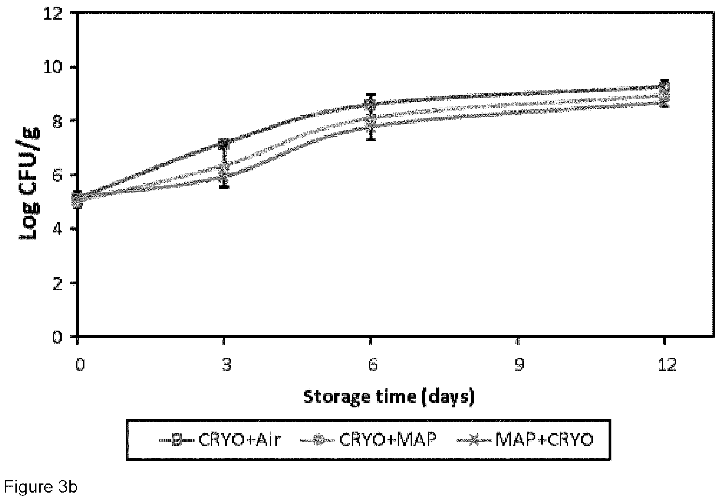

The highest counts for TAC and psychotrophic microorganisms, related to microbiological growth, were observed in samples packaged in air (CRYO+Air) compared to CRYO+MAP and MAP+CRYO samples, from day 6 of storage to the end of the study (Fig. 3).

Conclusions: There is a positive effect of cryogenic freezing combined with modified atmosphere packaging (MAP) compared with cryogenic freezing only on some properties of raw chicken drumsticks (lipid oxidation, color and microbiological growth). The final results are not affected by the order of the freezing and MAP steps.

### Example 2

Ready to eat paella (rice, vegetables and chicken meat) was studied in another set of trials. The product was purchased in a restaurant and transported to the laboratory in plastic containers for human consumption. Upon arrival at the laboratory, the paella was distributed in plastic trays.

The objective of this study was to investigate the combined effect of cryogenic freezing and modified atmosphere packaging on the quality of ready-to-eat paella after thawing.

The treatments were:
1. Air packaging followed by cryogenic freezing (Air+CRYO),
2. Modified atmosphere packaging (tray lidding machine) followed by cryogenic freezing (MAP+CRYO)

The gas mixture for the MAP treatment was CO₂/N₂: 30/70.

All the trays were frozen in mini-batch cryogenic freezing equipment and kept at -18 °C for 75 days (2.5 months). After this period of time, the samples were thawed and stored for 21 days at 4 °C. Paella samples were analyzed at 0, 3, 7, 14 and 21 days of the cold storage period.

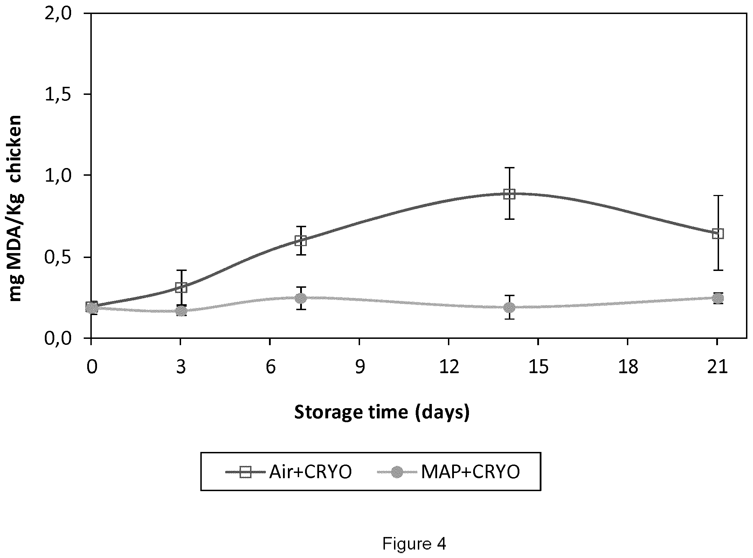

The results showed that the evolution of TBA index (lipid oxidation assessment) in chicken meat samples was significantly affected by the packaging atmosphere. TBA values in chicken paella packaged in air (Air+CRYO) significantly increased during the study, showing a gradual oxidation over the storage period (Fig. 4). Different studies have reported that meat products with a TBA value more than 1 mg MDA/kg cannot be consumed because of the lipid rancidity. In this study, TBA content in MAP+CRYO chicken samples remained low during the whole study and no significant differences were found between the sampling days. This result confirms that the absence of O₂ in the paella packages helps in avoiding sample oxidation in samples with high lipid content.

Conclusions: There is a positive effect of cryogenic freezing combined with modified atmosphere packaging (MAP) compared with cryogenic freezing only in controlling the lipid oxidation of one of the components (chicken) of the paella ready-to-eat meal.

### Example 3

A different set of trials was conducted with lasagne bolognese supplied by a frozen food producer. Lasagne was prepared with layers of bolognese sauce (containing beef and tomato) and bechamel and the cover consisted of a bechamel layer with cheddar cheese on top. Due to this product preparation, some analyses were performed in each of the layers (bolognese sauce and bechamel).

Samples were cryogenically frozen and packaged with air or with a modified atmosphere (CO₂/N₂: 50/50) (vacuum chamber machine) and kept at -18 °C for 1 month. After this period of time, samples were thawed at 4 °C over 24h and stored for 21 days (4 °C) in order to perform the shelf-life study of lasagne bolognese. During storage, samples were periodically analyzed at day 0, 3, 7, 14, and 21.

The objective of this study was to evaluate the effect of the combination of cryogenic freezing together with MAP on the quality of the lasagne product when compared with cryogenic freezing only.

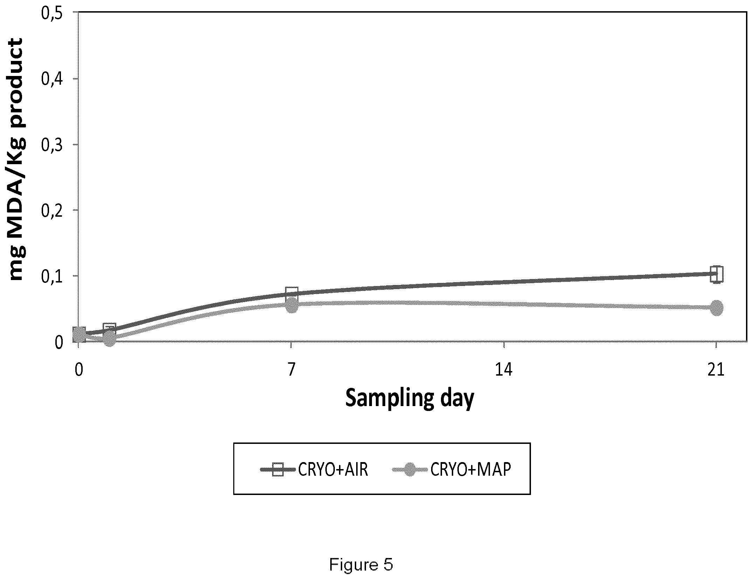

As shown in Fig. 5, lipid oxidation of the samples increased during cold storage. This increase was significantly higher in samples packaged in air. These results indicate that modified atmosphere packaging is a useful method for preserving the quality of this type of ready-to-eat product.

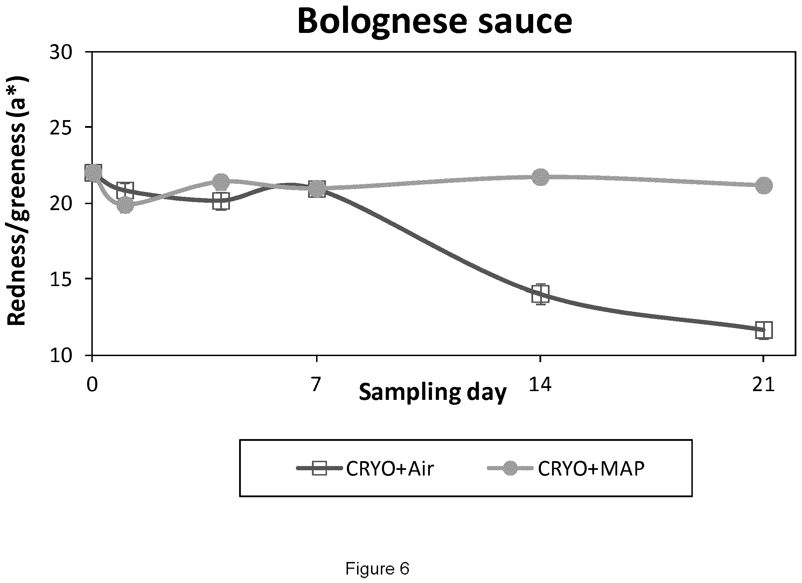

With regard to color evaluation, from day 14 onwards of the shelf-life differences were observed in lasagne packaged under different conditions. The bolognese sauce of lasagne packaged in air browned and showed less red color (Fig. 6). Changes in the color of the bolognese sauce could be attributed to the sauce oxidation, this deterioration being confirmed by the significant increase in TBA values (Fig. 5).

Conclusions: There is a positive effect of cryogenic freezing combined with modified atmosphere packaging (MAP) compared with cryogenic freezing only in reducing lipid oxidation and improving color stability of the lasagne bolognese.

### Example 4

A different set of trials was conducted with pre-cooked breaded chicken breasts.

The objective of this study was to evaluate the effect of refreezing conditions on the quality of breaded chicken which had previously been cryogenically frozen and packaged (vacuum chamber machine) using the gas mixture CO₂/N₂: 50/50 (CRYO+MAP) or air (CRYO+Air) and kept at -18 °C for 1 month. After this period of time, samples were thawed and stored for 10 and 20 days under refrigeration (4 °C). After this time, the samples were frozen again, in this case mechanically, simulating a domestic freezer condition (-18 °C), kept at -18 °C for 15 days, then thawed and finally analyzed immediately after thawing.

To evaluate the degree of lipid oxidation, the thiobarbituric acid (TBA) index was determined. The results showed that TBA values increased during cold storage. No significant differences were detected between samples treated with different freezingpackaging conditions. It is noteworthy that all of the samples, independently of the freezing procedure and atmosphere of packaging employed, exhibited low values of the TBA index.

With regard to color evaluation, no significant differences were detected between samples treated with different packaging atmospheres. Moreover, it should be noticed that cryogenic freezing and re-freezing did not affect the colour of the breaded chicken samples.

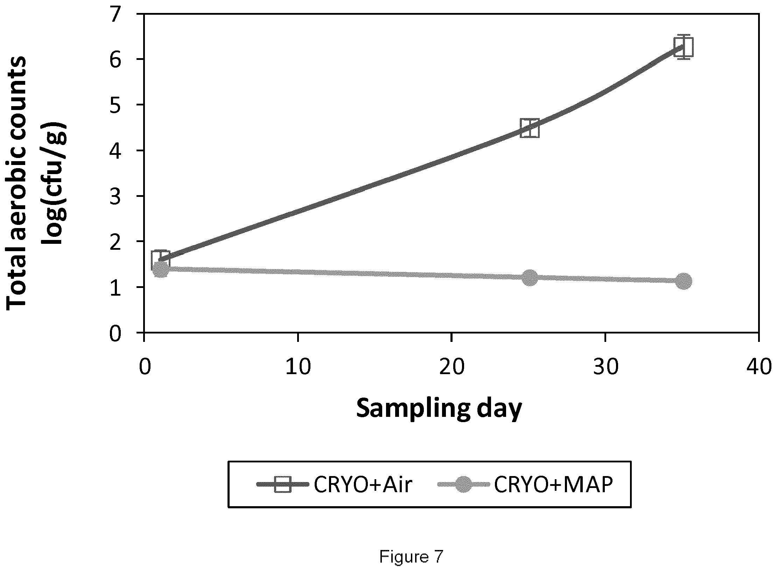

The total aerobic counts (TAC) of the breaded chicken samples after one month of frozen storage, were 1.57 log cfu/g. It is important to emphasize that higher counts for TAC were observed in samples packaged in air (CRYO+Air) compared to samples packaged with the gas mixture CO₂/N₂: 50/50 (CRYO+MAP) in both refreezing periods (Fig. 7).

The other microorganisms studied, *Enterobacteria, Staphylococcus aureus* and *Clostridium perfringens,* were not detected in any of the analyzed samples.

Conclusions: When the cryogenic freezing process is combined with a modified atmosphere packaging (MAP), breaded chicken can be refrozen (-18 °C) after being thawed for different periods of time (10 and 20 days) while keeping a high standard of quality. The most important result is that the microbiological counts are significantly reduced after the re-freezing period when using the MAP process instead of air.

### Example 5

Additionally, using the same breaded chicken product as in Example 4, samples were cryogenically frozen and packaged with air or with modified atmosphere (CO₂/N₂: 50/50) (vacuum chamber machine) and kept at -18 °C for 3 and 6 months. After this period of time, samples were thawed and analyzed, immediately after thawing and after 7 days under chilling conditions (4 °C).

The objective of this study was to evaluate whether the long term frozen period storage would cause deterioration in the quality of the food product.

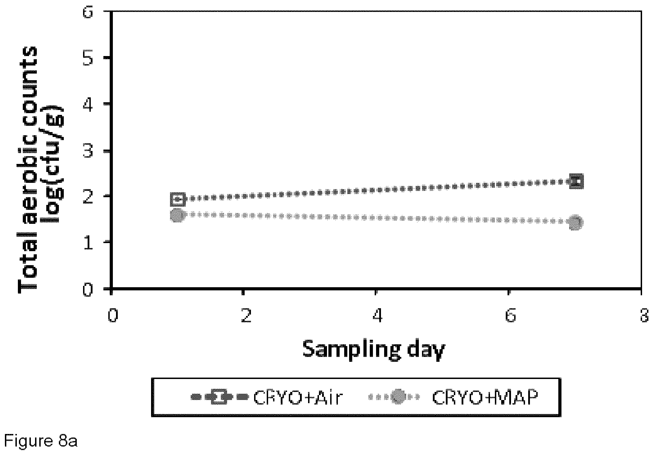

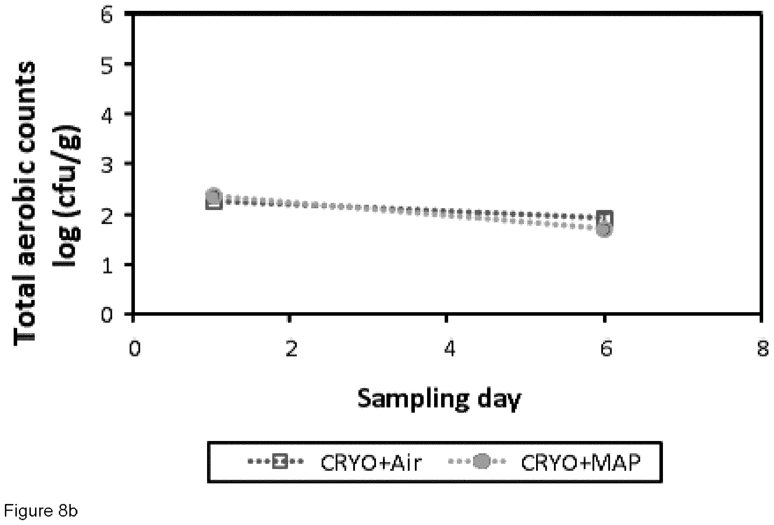

The microbiological results did not show significant differences between treatments (Fig. 8), and the levels of counts were low, indicating the stability of the product even when it was frozen for long period of time.

Conclusions: The cryogenic freezing of breaded chicken breast packaged with MAP and kept frozen for long periods of time, 3 and 6 months, maintains the product in good quality and with similar results to those after a frozen period of 1 month.

### Example 6

Extra trials were conducted with breaded chicken breast, also incorporating the MAP treatment alone, for comparative purposes. The samples were cryogenically frozen and packaged (vacuum chamber machine) with air or with a modified atmosphere (CO₂/N₂: 50/50) and kept at -18 °C for 1 month. After this period of time, samples were thawed at 4 °C over 24h and stored for 21 days (4 °C), with sampling days at 0, 3, 7, 14, and 21. Additionally, a treatment consisting of packaging breaded chicken breasts in modified atmosphere using the gas mixture CO₂/N₂: 50/50 was done. These samples were kept at 4 °C from the very beginning and during the storage period (21 days) a shelf-life study of the product was performed.

The objective of this study was to compare the combination of cryogenic freezing and MAP with MAP only.

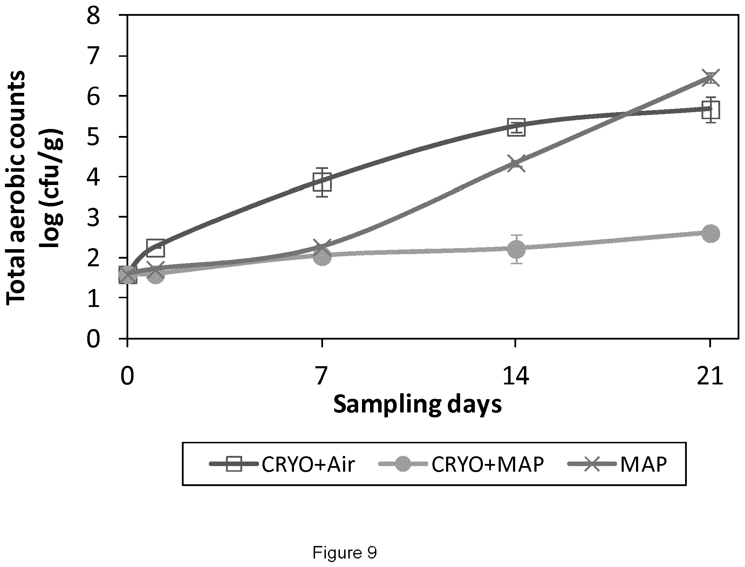

The results showed that the total aerobic counts were stable and significantly different in the combined treatment (CRYO+MAP) compared with the other two treatments (Fig. 9). It is worth taking into account that in the case of MAP the microorganisms started progressively growing from day 7 until the end of the study and in the CRYO+Air treatment this happened from day 1.

The sensorial evaluation of breaded chicken breast was assessed as acceptable in all the treatments and frozen periods, just after frying.

Conclusions: These results indicate that freezing this product cryogenically and packaging with modified atmosphere is a useful method for preserving the quality of the breaded chicken after thawing, prolonging its shelf-life in a better way than either treatment alone (CRYO+Air or MAP).

### Example 7

Trials were conducted with pre-treated raw desalted cod steaks. The samples were cryogenically frozen and packaged (tray lidding machine) with air or with a modified atmosphere (CO₂/N₂: 40/60) and kept at -18 °C for 1 month. After this period of time, samples were thawed at 4 °C over 24h and stored for 40 days (4 °C), with sampling days at 0, 1, 4, 7, 14, 22, 28, 35 and 40. Additionally, a modified atmosphere packaging with the gas mixture CO₂/N₂: 40/60 was used. These samples were kept at 4 °C from the start and during the storage period (40 days) a shelf-life study of the product was performed.

The objective of this study was to evaluate the possible synergetic effect of cryogenic freezing and MAP compared with MAP only in the quality of fish products during 4 °C storage.

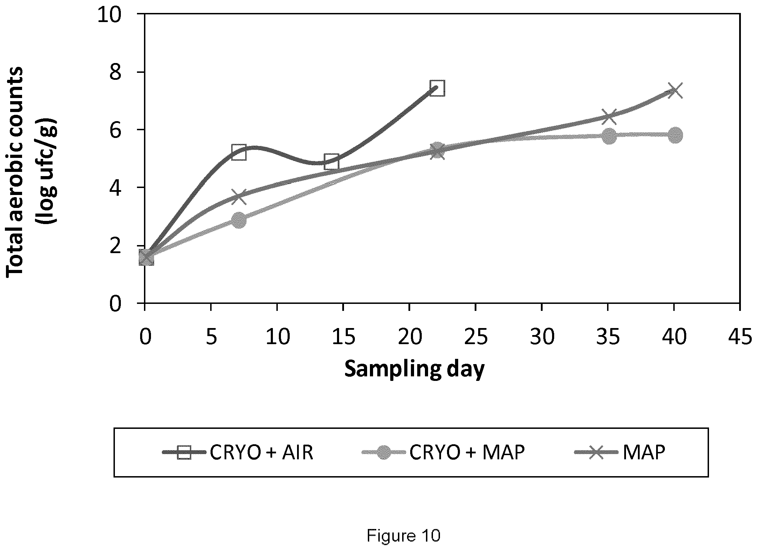

The results showed that in cod steaks preserved with CRYO+MAP, the microbes grew, but their counts remained below the other treatments until day 40 (Fig. 10). In CRYO+Air and MAP treatments, the microbiological shelf-lives were 14 and 22 days, respectively.

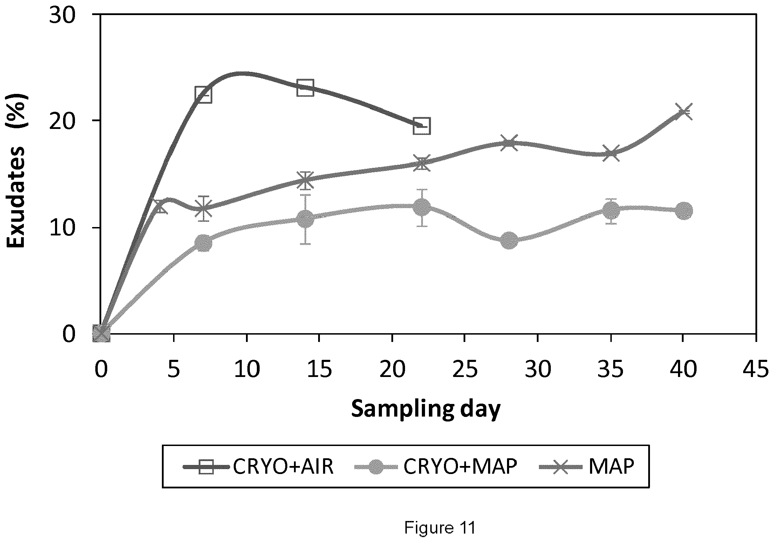

The amounts of exudates formed during the storage period were less in the CRYO+MAP treatment than in the other treatments. This is an important parameter for producers in terms of quality and losses of the product (Fig. 11).

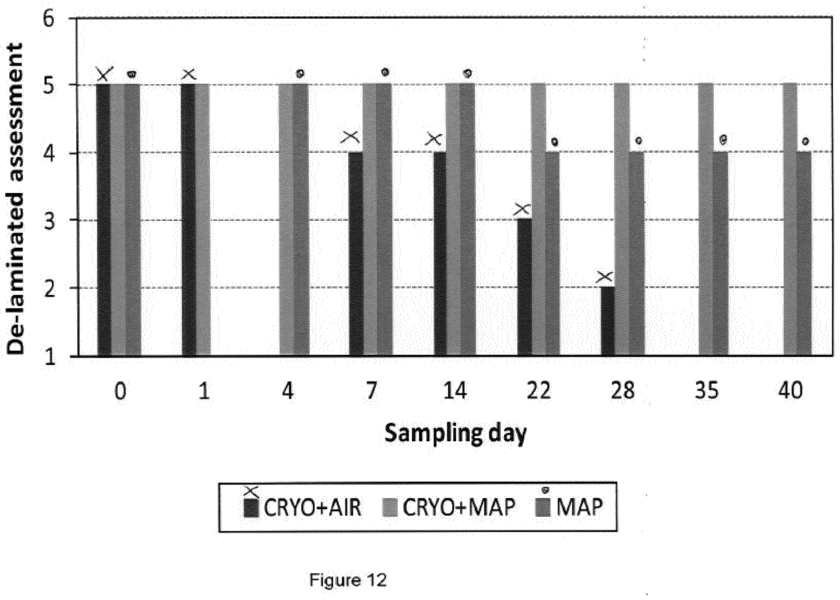

De-lamination (separation of the cod steak in layers) in cod steaks is a highly valued quality attribute, and this remained unchanged in the CRYO+MAP samples during the evaluation of shelf-life at 4° C, representing an important improvement over the other treatments (Fig. 12).

Conclusions: These results indicate that freezing desalted cod steaks cryogenically and packaging with modified atmosphere is a useful method for preserving the quality of this product after thawing, prolonging its shelf-life (sensorial and microbiological) in a better way than either treatment alone (CRYO or MAP).

### Example 8

Trials were conducted with a mix of grilled vegetables (red pepper, onion, and eggplant).

The objective of this study was to evaluate the effect of refreezing conditions on quality of the product, which had been previously cryogenically frozen and packaged using the gas mixture CO₂/N₂: 50/50 (CRYO+MAP) (tray lidding machine) or air (CRYO+Air) and kept at -18 °C for 1 month. After this period of time, the samples were thawed and stored for 21 days under refrigeration (4 °C). After this time, the samples were frozen again, kept at -18 °C for 10 days, then thawed and finally analyzed immediately after thawing.

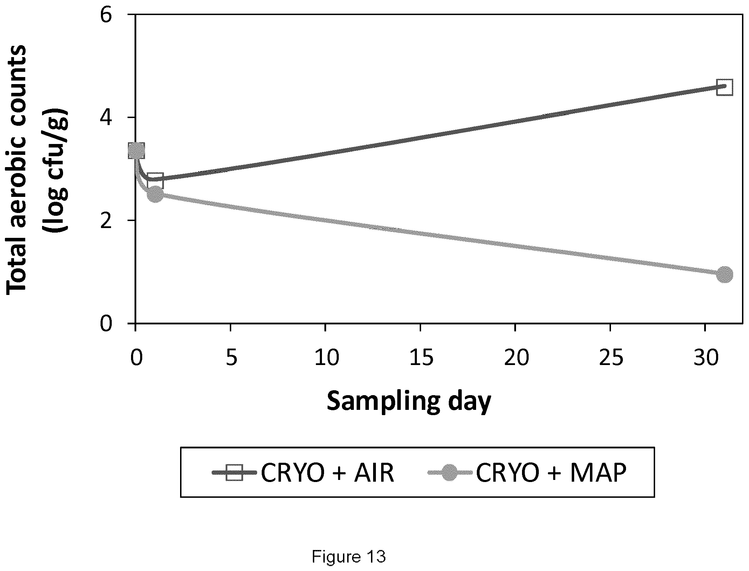

After the re-freezing process total aerobic counts of samples packaged in air (CRYO+Air) were higher than the grilled vegetables samples packaged with the gas mixture CO₂/N₂: 50/50 (CRYO+MAP) (Fig. 13). These results indicate that modified atmosphere without O₂ prevented microbial deterioration of the product during the refreezing study.

### Example 9

Samples of breaded chicken breast were cryogenically frozen or mechanically frozen using a conventional industrial system with ammonia as refrigerant and then packaged with air or with a modified atmosphere (CO₂/N₂: 50/50) (vacuum chamber machine) and kept at -18 °C for 1 month. After this period of time, samples were thawed at 4 °C over 24h and stored for 21 days (4 °C), with sampling days at 0, 3, 7, 14, and 21. Additionally, a treatment consisting of packaging breaded chicken breasts in modified atmosphere using the gas mixture CO₂/N₂: 50/50 was done. These samples were kept at 4 °C from the very beginning and during the storage period (21 days) a shelf-life study of the product was performed.

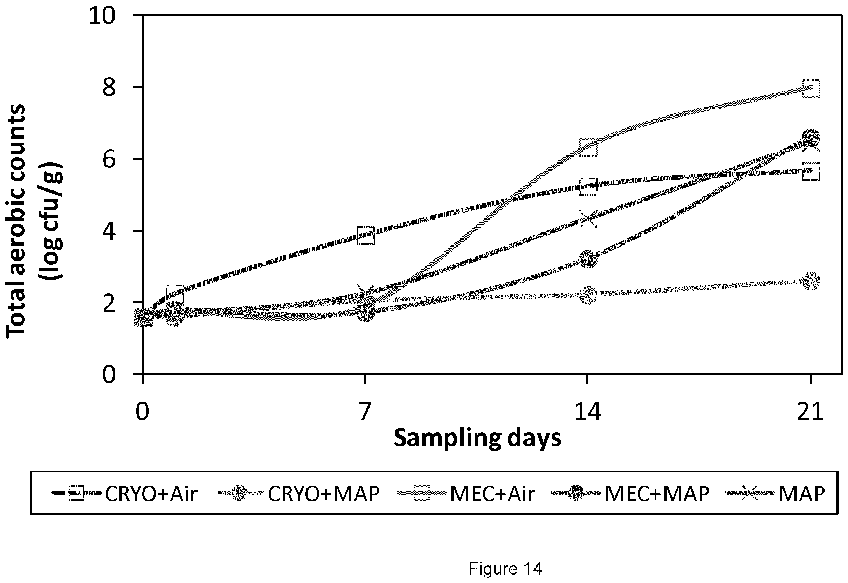

The results (Fig. 14) showed that the total aerobic counts mesophilic counts were stable and significantly different in the combined treatment (CRYO+MAP) compared with CRYO+Air and MAP. It is worth taking into account that in the case of MAP the microorganisms started progressively growing from day 7 until the end of the study and in the CRYO+Air treatment this happened from day 1.

In the combined treatment MEC+MAP, the counts were increased from day 7, following the same trend as the MAP treatment. The samples frozen mechanically (MEC+Air), also presented a microbiological growth that increased from day 7, and reached the highest total aerobic counts values with respect to the other treatments at the end of the study (day 21).

Comparing CRYO+MAP and MEC+MAP treatments, the results showed that at day 21 the samples under CRYO+MAP presented levels of bacteria similar to those of MEC+MAP at day 7.

At day 21 MEC+MAP gave similar results to MAP alone. This is similar to what is reported in Patsias et al. (MAP in addition to freeze-chilling had a negligible effect on product quality for raw chicken fillets). By contrast, CRYO+MAP gave much better results.

In addition, the MEC+Air samples reached 7.98 log ufc/g at day 21 while the samples preserved with CRYO+MAP obtained 2.61 log ufc/g at the same day. These results show a clear effect of this treatment with respect to the MEC+MAP in terms of microbiological shelf-life of the product.

### Advantages of Examples

The examples show a number of advantages:
- When comparing embodiments of the invention (cryogenic freezing and modified atmosphere packaging, CRYO+MAP) with mechanical freezing and modified atmosphere packaging (MEC+MAP), CRYO+MAP surprisingly gave much better microbiological results. As noted in Example 9 (Fig. 14), MEC+MAP gave similar results to MAP alone, whereas CRYO+MAP gave significantly better results.
- When comparing embodiments of the invention (CRYO+MAP) with cryogenic freezing under air (CRYO+AIR) or modified atmosphere packaging without freezing (MAP), better results were achieved in terms of reduced microbiological growth; reduced lipid oxidation; improved colour stability; reduced exudate; better cod delamination (Examples 1-9). The modified atmosphere packaging is believed to inhibit microbiological growth on the thawed food product and also to inhibit oxidation during the frozen stage (Figs. 2, 4 and 5).

These results suggests that combining cryogenic freezing with modified atmosphere packaging leads to a synergistic effect in increasing shelf-life of food products when these products are thawed.

The invention has been described with reference to preferred non-limiting embodiments and examples. However, the skilled person will appreciate that various modifications are possible within the scope of the claims.

### Non-Patent References

1. Fagan, J.D., Gormley, T.R. and Mhuircheartaigh, M.M. Ui. 2003. Effect of freeze-chilling, in comparison with fresh, chilling and freezing, on some quality parameters of raw whiting, mackerel and salmon portions. Lebensm.-Wiss. u.-Technol. 36: 647-655.
2.Fagan, J.D., Gormley, T.R. and Mhuircheartaigh, M.M. Ui. 2004. Effect of modified atmosphere packaging with freeze-chilling on some quality parameters of raw whiting, mackerel and salmon portions. Innovative Food Science and Emerging Technologies 5: 205-214
3. Gioacchino, B., Badalucco, C. V., Cusumano, S. and Palmegiano, G. B. 2012. Toward shrimp without chemical additives: A combined freezing-MAP approach portions. LWT - Food Science and Technology 46: 274-279.
4. Redmond, G., Gormley, R., Butler, F., Dempsey, A., Oxley, E. and Gerety, A. 2004. Chilling of Ready-to-eat Meal Components. The national food centre. Research & training for the food industry. Research report Nº 66. Pp 32.
5. Leygonie C., Britz T. J. and Hoffman L. C. 2011. Oxidative stability of previously frozen ostrich Muscularis iliofibularis packaged under different modified atmospheric conditions. International Journal of Food Science and Technology. 46, 1171-1178.
6. Bøknæs, N., Østerberg, C., Nielsen, J. and P. Dalgaard, P. 2000. Influence of freshness and frozen storage temperature on quality of thawed cod fillets stored in modified atmosphere packaging. Lebensm.-Wiss. u. -Technol., 33: 244-248.
7. Bøknæs, N., Østerberg, C., Nielsen, J. and P. Dalgaard, P. 2001. Effect of technological parameters and fishing ground on quality attributes of thawed, chilled cod fillets stored in modified atmosphere packaging, Lebensmittel-Wissenschaft und - Technologie. 34:513-520.
8.Patsias, A.V. Badeka, I.N. Savvaidis, M.G. Kontominas. 2008. Combined effect of freeze chilling and MAP on quality parameters of raw chicken fillets. Food Microbiology 25: 575-581.
9. Rosnes, J.T., Kleiberg, G.H. and Folkvord, I. 2001. Increased shelf-life of salmon (Salmo salar) steaks using partial freezing (liquid nitrogen) and modified atmosphere packaging (MAP). Annales Societatis Scientiarum Faeroensis Supplementum XXVIII: 83-91.
10. Pegg, R. B. (2001). Spectrophotometric measurement of secondary lipid oxidation products. Current Protocols in Food Analytical Chemistry. D2.4.1-D2.4.18.

### Patent References

1. EP 0 440 601 B1: Cuisson sous atmosphere gazeuse.
2. EP 1 798 147 B1: Container for transporting articles under controlled or modified atmosphere.
3. EP 2 066 187 B1: Method for processing precooked consumable products.
4. CA 2 164 234 A1: Ecological method of destroying pests in the forest.
5. EP 0 657 107 A1: Storage perishable foodstuffs.
6. WO2008/009450 A1: Preparation of a food product.
7. WO2009/154435 A1: Equipment for ultra-rapid freezing of foods through direct metered contact with liquid nitrogen.
8. CN10331505A
9. CN102986841A
10. EP1523250

## Claims

1. A method of food preservation comprising providing a frozen food product in modified atmosphere packaging by the steps of:
- cryogenic freezing of the food product; and
- modified atmosphere packaging of the food product,
wherein the steps can be conducted in either order.

2. A method as claimed in Claim 1, wherein the modified atmosphere packaging step takes place before the cryogenic freezing step and no heating step takes place between the modified atmosphere packaging step and the cryogenic freezing step.

3. A method as claimed in either one of the preceding claims, wherein the cryogenic freezing step is conducted at a temperature of -40 °C or lower.

4. A method as claimed in any one of the preceding claims, wherein the food product is frozen to a core temperature of -10 °C or lower.

5. A method as claimed in any one of the preceding claims, wherein the cryogenic freezing step is conducted using liquid nitrogen, solid carbon dioxide and/or liquid carbon dioxide as cryogen.

6. A method as claimed in any one of the preceding claims, wherein the modified atmosphere includes carbon dioxide, nitrogen and optionally oxygen and/or argon.

7. A method as claimed in Claim 6, wherein the modified atmosphere includes at least 5 vol% carbon dioxide.

8. A method as claimed in any one of the preceding claims, further comprising a step of frozen storage of the food product for at least one month.

9. A method as claimed in any one of the preceding claims, further comprising a step of thawing the food product and storing it under chilled conditions.

10. A method as claimed in Claim 9, wherein the thawed food product is stored under chilled conditions for at least 10 days, preferably for at least 20 days.

11. A method as claimed in Claim 9 or Claim 10, wherein the step of thawing the food product and storing it under chilled conditions includes storage during transportation and/or retail display.

12. A method as claimed in any one of Claims 9 to 11, wherein the thawed food product is suitable for refreezing.

13. A method as claimed in any one of the preceding claims wherein the food product comprises one or more of fish, meat, vegetables and ready-made food products comprising fish, meat and/or vegetables.

14. A food product preserved by a method as claimed in any one of the preceding claims.

## Patentansprüche

1. Verfahren zur Nahrungsmittelkonservierung, das das Bereitstellen von einem gefrorenen Nahrungsmittelprodukt in einer Verpackung mit modifizierter Atmosphäre durch die folgenden Schritte umfasst:
- kryogenes Gefrieren des Nahrungsmittelprodukts; und
- Verpacken des Nahrungsmittelprodukts in modifizierter Atmosphäre, wobei die Schritte in irgendeiner Reihenfolge durchgeführt werden können.

2. Verfahren nach Anspruch 1, wobei der Schritt des Verpackens in modifizierter Atmosphäre vor dem Schritt des kryogenen Gefrierens stattfindet und zwischen dem Schritt des Verpackens in modifizierter Atmosphäre und dem Schritt des kryogenen Gefrierens kein Schritt des Erwärmens stattfindet.

3. Verfahren nach einem der vorhergehenden Ansprüche, wobei der Schritt des kryogenen Gefrierens bei einer Temperatur von -40 °C oder weniger durchgeführt wird.

4. Verfahren nach einem der vorhergehenden Ansprüche, wobei das Nahrungsmittelprodukt auf eine Kerntemperatur von -10 °C oder weniger gefroren wird.

5. Verfahren nach einem der vorhergehenden Ansprüche, wobei der Schritt des kryogenen Gefrierens unter Verwendung von flüssigem Stickstoff, festem Kohlendioxyd und/oder flüssigem Kohlendioxid als Kryogen durchgeführt wird.

6. Verfahren nach einem der vorhergehenden Ansprüche, wobei die modifizierte Atmosphäre Kohlendioxid, Stickstoff und optional Sauerstoff und/oder Argon umfasst.

7. Verfahren nach Anspruch 6, wobei die modifizierte Atmosphäre mindestens 5 Vol.-% Kohlendioxid umfasst.

8. Verfahren nach einem der vorhergehenden Ansprüche, das ferner einen Schritt des gefrorenen Aufbewahrens von dem Nahrungsmittelprodukt über mindestens einen Monat umfasst.

9. Verfahren nach einem der vorhergehenden Ansprüche, das ferner einen Schritt des Tauens von dem Nahrungsmittelprodukts und des Aufbewahrens von diesem unter gekühlten Bedingungen umfasst.

10. Verfahren nach Anspruch 9, wobei das getaute Nahrungsmittelprodukt unter gekühlten Bedingungen für mindestens 10 Tage, vorzugsweise für mindestens 20 Tage aufbewahrt wird.

11. Verfahren nach Anspruch 9 oder 10, wobei der Schritt des Tauens von dem Nahrungsmittelprodukt und des Aufbewahrens von diesem unter gekühlten Bedingungen die Aufbewahrung während des Transports und/oder der Zurschaustellung im Einzelhandel umfasst.

12. Verfahren nach einem der Ansprüche 9 bis 11, wobei das getaute Nahrungsmittelprodukt zum erneuten Einfrieren geeignet ist.

13. Verfahren nach einem der vorhergehenden Ansprüche, wobei das Nahrungsmittelprodukt eines oder mehrere aus Fisch, Fleisch, Gemüse und Nahrungsmittelfertigprodukten, die Fisch, Fleisch und/oder Gemüse umfassen, umfasst.

14. Nahrungsmittelprodukt, das durch ein Verfahren nach einem der vorhergehenden Ansprüche konserviert ist.

## Revendications

1. Procédé de conservation d'aliments comprenant la fourniture d'un produit alimentaire congelé dans un emballage sous une atmosphère modifiée par les étapes de:
- congélation cryogénique du produit alimentaire ; et
- emballage sous une atmosphère modifiée du produit alimentaire,
dans lequel les étapes peuvent être réalisées dans un ordre quelconque.

2. Procédé selon la revendication 1, dans lequel l'étape d'emballage sous une atmosphère modifiée a lieu avant l'étape de congélation cryogénique et aucune étape de chauffage n'a lieu entre l'étape d'emballage sous une atmosphère modifiée et l'étape de congélation cryogénique.

3. Procédé selon l'une quelconque des revendications précédentes, dans lequel l'étape de congélation cryogénique est réalisée à une température de -40 °C ou moins.

4. Procédé selon l'une quelconque des revendications précédentes, dans lequel le produit alimentaire est congelé à une température d'âme de -10 °C ou moins.

5. Procédé selon l'une quelconque des revendications précédentes, dans lequel l'étape de congélation cryogénique est réalisée à l'aide d'azote liquide, de dioxyde de carbone solide et/ou de dioxyde de carbone liquide comme agent de cryogénie.

6. Procédé selon l'une quelconque des revendications précédentes, dans lequel l'atmosphère modifiée comporte du dioxyde de carbone, de l'azote et éventuellement de l'oxygène et/ou de l'argon.

7. Procédé selon la revendication 6, dans lequel l'atmosphère modifiée comporte au moins 5 % en volume de dioxyde de carbone.

8. Procédé selon l'une quelconque des revendications précédentes, comprenant en outre une étape de stockage sous forme congelée du produit alimentaire pendant au moins un mois.

9. Procédé selon l'une quelconque des revendications précédentes, comprenant en outre une étape de décongélation du produit alimentaire et de stockage de celui-ci dans des conditions réfrigérées.

10. Procédé selon la revendication 9, dans lequel le produit alimentaire décongelé est stocké dans des conditions réfrigérées pendant au moins 10 jours, de préférence pendant au moins 20 jours.

11. Procédé selon la revendication 9 ou la revendication 10, dans lequel l'étape de décongélation du produit alimentaire et de stockage de celui-ci dans des conditions réfrigérées comporte un stockage pendant le transport et/ou la vente au détail.

12. Procédé selon l'une quelconque des revendications 9 à 11, dans lequel le produit alimentaire décongelé est adapté à une nouvelle congélation.

13. Procédé selon l'une quelconque des revendications précédentes, dans lequel le produit alimentaire comprend un ou plusieurs parmi le poisson, la viande, les légumes et les produits alimentaires prêts à l'emploi comprenant du poisson, de la viande et/ou des légumes.

14. Produit alimentaire conservé par un procédé selon l'une quelconque des revendications précédentes.
